# EUROPÄISCHE PATENTSCHRIFT

(11) **EP 3 507 192 B1**
(45) Veröffentlichungstag und Bekanntmachung des Hinweises auf die Patenterteilung: **14.09.2022**
(21) Anmeldenummer: 17749190.9
(22) Anmeldetag: 07.08.2017
(51) Int. Cl.: B63H 23/30, B63H 21/21, B63H 23/06, F16H 61/00

(54) **ANTRIEBSANORDNUNG FÜR EIN SCHIFF MIT MITTEL ZUR ZUSTANDSÜBERWACHUNG**
DRIVE ARRANGEMENT FOR A SHIP WITH MEANS FOR STATE MONITORING
SYSTÈME DE PROPULSION POUR UN NAVIRE COMPRENANT DES MOYENS DE SURVEILLANCE D'ÉTAT

(30) Priorität: 05.09.2016 DE 102016216731
(43) Veröffentlichungstag der Anmeldung: 10.07.2019
(73) Patentinhaber: ZF Friedrichshafen AG, 88046 Friedrichshafen (DE)
(72) Erfinder: KURUCZ, Marton, 88048 Friedrichshafen (DE); WOLF, Daniel, 88048 Friedrichshafen (DE); SCHÄFER, Johannes, 88048 Friedrichshafen (DE); AMANN, Jörg, 88094 Oberteuringen (DE)
(74) Vertreter: ZF Friedrichshafen AG
(86) Internationale Anmeldenummer: PCT/EP2017/069955
(87) Internationale Veröffentlichungsnummer: WO 2018/041549

(56) Entgegenhaltungen:
- EP-A1- 0 625 651
- DE-A1-102005 001 552
- DE-A1-102013 219 346
- JP-A- H0 198 744
- JP-A- H08 150 999
- US-A1- 2003 049 979
- US-A1- 2009 215 337
- US-A1- 2012 160 037

## Beschreibung

Die Erfindung betrifft eine Antriebsanordnung für ein Schiff mit Mittel zur Zustandsüberwachung eines Leistungspfades. Ferner betrifft die Erfindung auch ein Verfahren zur Zustandsüberwachung eines Leistungspfades einer Antriebsanordnung für ein Schiff. Mithin erstreckt sich das Anwendungsgebiet der Erfindung auf Antriebsanordnungen für Schiffe.

Aus der EP 0 551 367 B1 geht ein Verfahren zum Erzielen der optimalen Nutzung einer Maschinenleistung durch ein Schiff hervor. Das Schiff weist eine Maschine, eine Schiffsschraube und eine Schiffsschraubenwelle sowie einen Kraftsensor zum Überwachen der resultierenden Längskraft in der Schiffsschraubenwelle auf. Die Schiffsschraubenwelle ist in einem Axialdrucklager gehalten. Das Verfahren verwendet eine Regulierschleife, welche kontinuierlich die Nutzung der Maschinenleistung durch Regulieren der Leistungsabgabe von der Maschine unter Verwendung des Kraftsignals als einen Regelparameter regelt, wobei die Regulierschleife in der Lage ist, einen Angriffswinkel eines Blatts der Schiffsschraube zu regulieren. Der Kraftsensor ist an einem kontinuierlichen Abschnitt der Schiffsschraubenwelle außerhalb der Schiffsschraubenwelle angebracht und misst die von der Schiffsschraubenwelle auf das Axialdrucklager übertragene Kraft. Die Regulierschleife ist in der Lage, die Umdrehungsrate der Schiffsschraubenwelle durch Regeln der Maschine unter Verwendung des Kraftsignals als einen Regelparameter zu regulieren. Die Regulierschleife umfasst dabei einen Computer, welcher zum Regulieren der Leistungsabgabe von der Maschine programmiert ist, um die resultierende Längskraft auf eine optimale Kraft zu bringen, welche zum Optimieren des Wirkungsgrads der Schiffsschraube und des Kraftstoffverbrauchs der Maschine erforderlich ist.

US 2003/049979 A1 betrifft ein Schiffsgetriebe bestehend aus einer hydraulischen Steueranordnung mit variablen Lamellenkupplungen für Vorwärts- und Rückwärtsfahrt, in die der zum Einrücken der Lamellenkupplungen erforderliche Betriebsdruck einwirkt und mittels Steuermitteln eingestellt wird. Ferner zugehörig ist eine elektronische Steuereinheit zum Erfassen und Verarbeiten mindestens eines Betriebsparameters und zum Betreiben der Steuermittel. Die elektronische Steuereinheit ist mit einem Sensor verbunden, welcher eine Motordrehzahl und/oder ein Lastsignal des Motors erfasst.

Ferner offenbaren US 2009/215337 A1, DE 10 2005 001 552 A1, JPH08150999 A, JP H01 98744 A und DE 10 2013 219 346 A1 Antriebsanordnungen für Schiffe mit verschiedenen Sensoren, die zur Erfassung unterschiedlicher Zustandsgrößen im Leistungspfad dienen. Die zuvor genannten Dokumente eint, dass die verwendeten Sensoren zur Zustandsüberwachung eines einzigen Bauteils vorgesehen sind.

Die Aufgabe der vorliegenden Erfindung besteht darin, eine Antriebsanordnung für ein Schiff zu schaffen, mit welcher die Zustandsüberwachung eines Leistungspfades ermöglicht wird.

Die Aufgabe wird gelöst durch den Gegenstand von Patentanspruch 1. Bevorzugte Ausführungsformen sind Gegenstand der abhängigen Ansprüche.

Die erfindungsgemäße Antriebsanordnung für ein Schiff umfasst zumindest eine Antriebsmaschine und ein Getriebe zum Antrieb einer Propellerwelle, wobei das Getriebe Mittel zur Zustandsüberwachung eines Leistungspfades aufweist, und wobei die Mittel zur Zustandsüberwachung des Leistungspfades mindestens ein erstes und ein zweites Sensorelement zur Erfassung mindestens einer Zustandsgröße des Leistungspfades aufweisen, wobei die mindestens zwei Sensorelemente im Leistungspfad zwischen einer Antriebsquelle und einer Abtriebsquelle angeordnet sind, um eine Abweichung von einem idealen Zustand des Leistungspfades frühzeitig zu identifizieren und einen Serviceumfang vorrausschauend zu planen.

Gemäß dem erfindungsgemäßen Verfahren zur Zustandsüberwachung des Leistungspfades der Antriebsanordnung für ein Schiff wird mindestens eine Zustandsgröße von Mitteln zur Zustandsüberwachung des Leistungspfades erfasst, um eine Abweichung von einem idealen Zustand des Leistungspfades frühzeitig zu identifizieren und einen Serviceumfang vorrausschauend zu planen.

Die Erfindung schließt die technische Lehre ein, dass das jeweilige Sensorelement dazu vorgesehen ist, zumindest ein Drehmoment zu erfassen. Die Zustandsüberwachung des Leistungspfades erfolgt in Abhängig von einer beliebigen Messmethode. Insbesondere wird mittels der mindestens zwei Sensorelemente das Drehmoment bzw. der Drehmomentunterschied im Leistungspfad, beispielsweise mittels Dehnungsmessstreifen gemessen. Ferner kann ergänzend oder alternativ auch eine Drehsteifigkeit im Leistungspfad gemessen werden. Mittels der Drehsteifigkeitsmessung kann bei Lasteinleitung die Verformung im Leistungspfad zwischen den beiden Messstellen erfasst werden. Insbesondere wird eine Phasenverschiebung zwischen dem ersten und dem zweiten Sensorelement erfasst. Dadurch kann eine Torsion im Leistungspfad gemessen werden. Die Torsion im Leistungspfad ist im Wesentlichen von der Weichheit der im Leistungspfad angeordneten Bauteile sowie vom Betrag der eingeleiteten Leistung abhängig.

Unter einem "Leistungspfad" ist ein Pfad in der Antriebsanordnung, insbesondere im Getriebe der Antriebsanordnung zu verstehen, der dazu vorgesehen ist, ein Drehmoment zu führen. Insbesondere umfasst der Leistungspfad mehrere Getriebeelemente, insbesondere Flanschverbindungselemente, Wellen und Zahnräder, die miteinander in Verbindung stehen. Erfindungsgemäß sind die Getriebeelemente starr miteinander gekoppelt. Eine starre Kopplung umfasst keine rutschenden und/oder schlupfenden Elemente. Durch den Entfall der rutschenden und/oder schlupfenden Elemente im Leistungspfad Entfallen bei der Überwachung des Leistungspfades unbekannte Einflussparameter. Die Zustandsüberwachung des Leistungspfades erfolgt über mehrere Getriebeelemente. Daher umfassen die Mittel zur Zustandsüberwachung des Leistungspfades mindestens zwei Sensorelemente, wobei die mindestens zwei Sensorelemente im Leistungspfad angeordnet sind.

Der Betrieb der Antriebsanordnung in einem Drehmomentintervall zwischen einem minimalen Grenzwert und einem maximalen Grenzwert stellt den "ideale Zustand" des Leistungspfades dar. Abweichungen unter dem minimalen Grenzwert oder über dem maximalen Grenzwert können, insbesondere zu Effizienzeinbußen führen.

Unter einer frühzeitigen Identifizierung der Abweichung vom idealen Zustand ist zu verstehen, dass insbesondere auch geringfügige, dauerhafte Abweichungen von einem Soll-Drehmoment kurzfristig nach ihrem Eintreten identifiziert werden. Dazu umfassen die Mittel zur Zustandsüberwachung ein Rechnersystem. Das Rechnersystem ist dazu vorgesehen, durch Verarbeitung der Sensorsignale der mindestens zwei Sensorelemente einen Serviceumfang für die bevorstehende Wartung zu erstellen oder zu ergänzen und insbesondere das Serviceintervall anzupassen. Mithin sind die Mittel zur Zustandsüberwachung des Leistungspfades dazu vorgesehen, einen Serviceumfang vorrausschauend zu planen

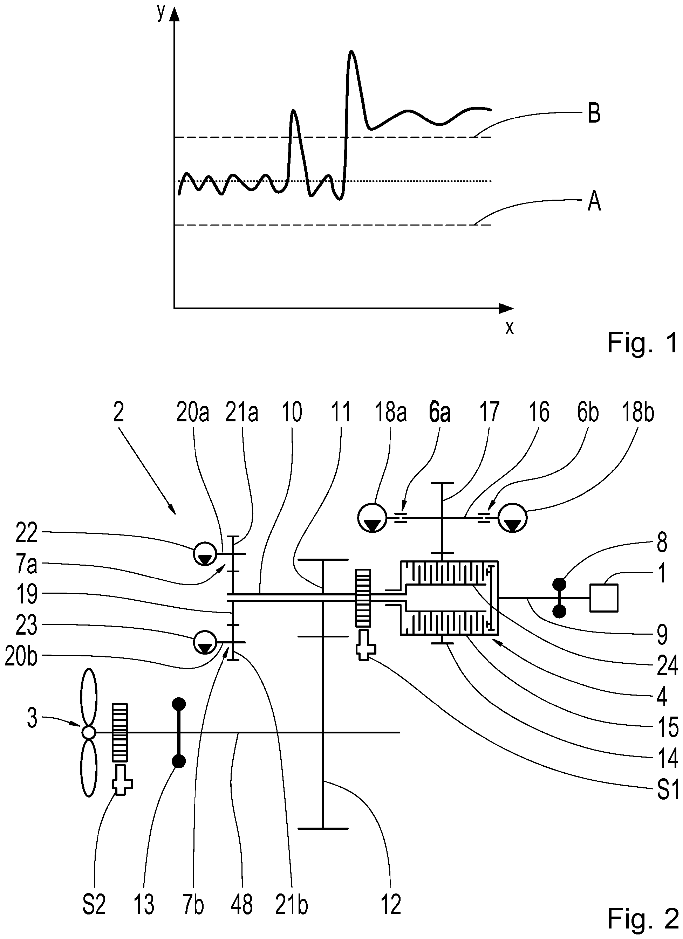

Vorzugsweise ist das erste Sensorelement leistungsflussabwärts einer Kupplungsvorrichtung angeordnet, wobei das zweite Sensorelement an der Propellerwelle angeordnet ist. Mithin ist das erste Sensorelement im Leistungsfluss hinter der Kupplungsvorrichtung angeordnet. Bezüglich weiterer Informationen, hinsichtlich der Anordnung und Funktion des ersten und zweiten Sensorelements wird auf die Figuren 2 bis 4 sowie die dazugehörige Figurenbeschreibung verwiesen.

Das von den Sensorelementen erfasste Drehmoment des Leistungspfades, das an der Propellerwelle wirkende Drehmoment in Kombination mit bekannten Getriebe- und Systemparametern, wie beispielsweise eine Drehzahl der Antriebsmaschine, eine Getriebeübersetzung des Getriebes, eine Propellerkennlinie, eine Geschwindigkeit des Schiffes, eine Beladung des Schiffes und/oder ähnliche Getriebe- und Systemparameter, ermöglichen die Erkennung von Abweichungen vom idealen Betrieb der Antriebsanordnung. Dadurch lassen sich insbesondere unerwünschte Schadensfälle am Propeller bzw. an der Propellerwelle, beispielsweise durch Grundberührung, und negative Veränderungen im Propellerbetrieb, beispielsweise durch Ablagerungen oder Biofouling, frühzeitig identifizieren. Daraus ergibt sich der Vorteil, dass darauf bezogene Serviceumfänge vorausschauend geplant werden können.

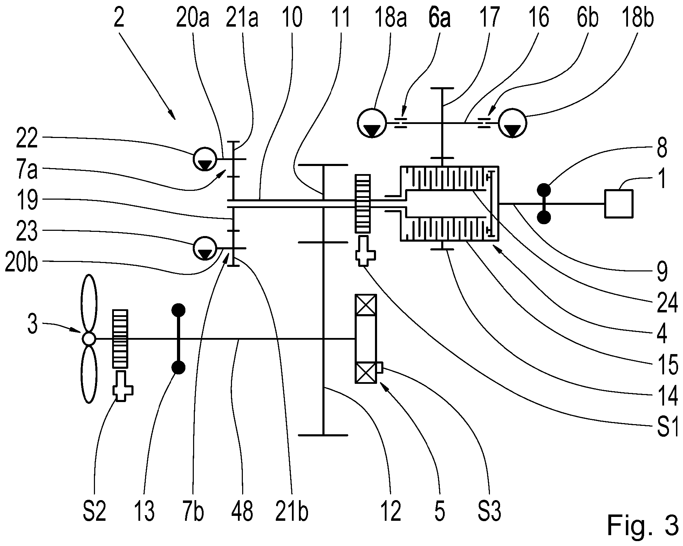

Bevorzugt weisen die Mittel zur Zustandsüberwachung des Leistungspfades zumindest ein drittes Sensorelement zur Erfassung mindestens einer Zustandsgröße auf, wobei das dritte Sensorelement an einem im Leistungspfad zwischen dem ersten und dem zweiten Sensorelement angeordneten Lagerelement ausgebildet ist. Das Lagerelement ist insbesondere als Hauptaxiallager ausgebildet, wobei vorzugsweise die Propellerwelle drehbar an dem Lagerelement aufgenommen ist. Das dritte Sensorelement ermöglicht die Messung einer Propellerschubkraft. Dadurch kann eine Validierung der Propellerkennlinie, insbesondere das Verhältnis zwischen einem tatsächlichen Propellerdrehmoment und einer Propellerschubkraft erfolgen. Dies trägt zur Steigerung der Propellereffizienz bei. Beispielsweise kann eine lastgerechte Antriebsstrangdrehmomentregelung, insbesondere anhand einer Antriebsmaschinendrehmomentregelung erfolgen. Zusätzlich können die Sensorsignale der Sensorelemente bei Verstellpropellern zur Optimierung der Einstellung eines Propeller-Pitchwinkels beitragen. Bezüglich weiterer Informationen, hinsichtlich der Anordnung und Funktion des dritten Sensorelements wird auf Figur 3 sowie die dazugehörige Figurenbeschreibung verwiesen.

Ferner bevorzugt weisen die Mittel zur Zustandsüberwachung des Leistungspfades zumindest ein viertes und fünftes Sensorelement zur Erfassung mindestens einer Zustandsgröße auf, wobei das vierte Sensorelement leistungsflussabwärts der Antriebsmaschine angeordnet ist, und wobei das fünfte Sensorelement leistungsflussaufwärts der Kupplungsvorrichtung angeordnet ist. Mithin ist das vierte Sensorelement im Leistungsfluss hinter der Antriebsmaschine angeordnet. Demgegenüber ist das fünfte Sensorelement im Leistungsfluss vor der Kupplungsvorrichtung angeordnet.

Das vierte und fünfte Sensorelement ermöglicht die Messung eines Antriebsdrehmoments am Leistungseingang des Getriebes unmittelbar hinter der Antriebsmaschine. Dadurch können verschiedene Getriebebetriebszustände, insbesondere Lastkollektive überwacht werden, wobei dies zur Steigerung einer Getriebeleistung und einer Getriebeeffizienz beiträgt. Insbesondere erfolgt eine lastgerechte Kupplungsdruckregelung, wobei die Übertragung großer Drehmomente hohe Kupplungsdrücke erfordert, und wobei die Übertragung kleinere Drehmomente geringe Kupplungsdrücke erfordert. Ein Pumpenbetrieb kann somit bedarfsgerecht und effizient gesteuert werden. Ferner kann durch die Zustandsüberwachung des Leistungspfades vor der Kupplungsvorrichtung eine erweiterte Kupplungsüberwachung, insbesondere eine Überwachung des Kupplungsverschleißes und der Kupplungsfunktion realisiert werden. Dabei werden insbesondere nicht nur Differenzdrehzahlen sondern auch Differenzdrehmomente an der Kupplungsantriebsseite bzw. Kupplungsabtriebsseite erfasst, um Information zur Kupplungsleistungsbilanz bzw. zum Kupplungszustand zu generieren.

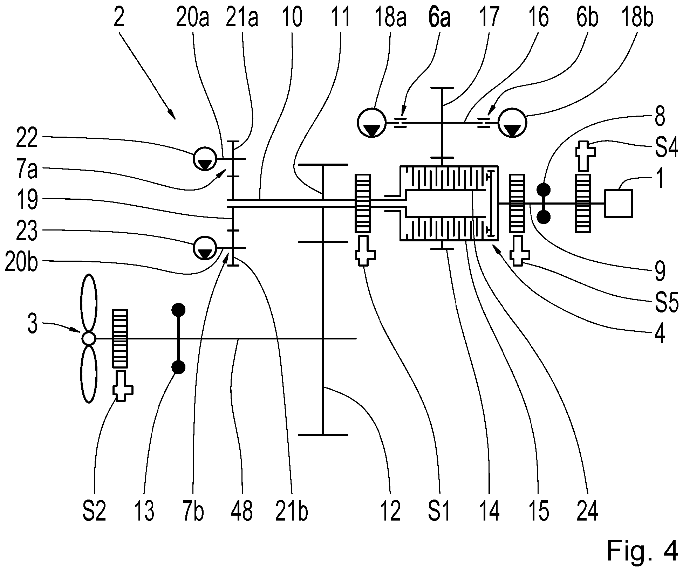

Alternativ kann das Antriebsdrehmoment am Leistungseingang des Getriebes zur Einsparung des vierten und fünften Sensorelements auch direkt aus den Informationen eines Antriebsmaschinensteuergeräts errechnet werden. Insbesondere werden bei einer als Verbrennungsmotor ausgebildeten Antriebsmaschine eine Fahrpedalstellung, eine Drehzahl, eine Einspritzmenge, ein Zündzeitpunkt und ähnlich Informationen dem Antriebsmaschinensteuergerät entnommen. Bezüglich weiterer Informationen, hinsichtlich der Anordnung und Funktion des vierten und fünften Sensorelements wird auf Figur 4 sowie die dazugehörige Figurenbeschreibung verwiesen.

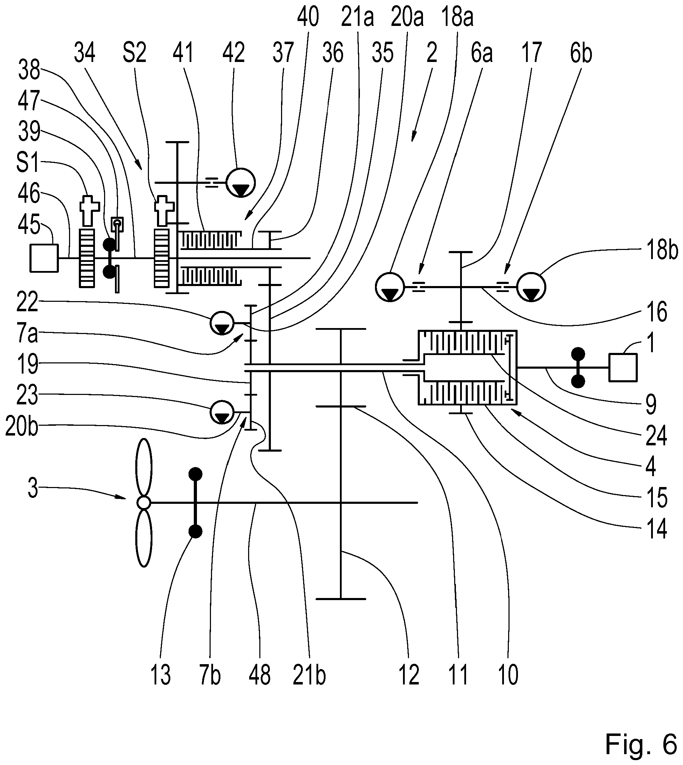

Gemäß einem bevorzugten Ausführungsbeispiel sind das erste und zweite Sensorelement in einem Nebenantriebspfad des Getriebes angeordnet. Mithin umfasst die Antriebsanordnung einen, vorzugsweise zuschaltbaren Nebenantrieb. Bezüglich weiterer Informationen, hinsichtlich der Anordnung und Funktion des Nebenantriebs wird auf Figur 6 sowie die dazugehörige Figurenbeschreibung verwiesen. Der Nebenantrieb wird auch als PTI (Power Take In) bezeichnet.

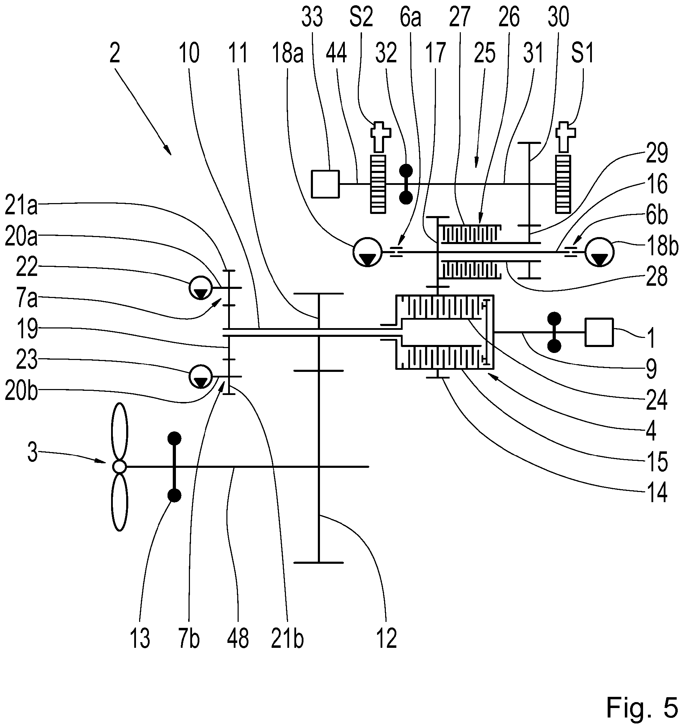

Gemäß einem bevorzugten Ausführungsbeispiel sind das erste und zweite Sensorelement in einem Nebenabtriebspfad des Getriebes angeordnet. Mithin umfasst die Antriebsanordnung einen, vorzugsweise zuschaltbaren Nebenabtrieb. Bezüglich weiterer Informationen, hinsichtlich der Anordnung und Funktion des Nebenabtriebs wird auf Figur 5 sowie die dazugehörige Figurenbeschreibung verwiesen. Der Nebenabtrieb wird auch als PTO (Power Take Off) bezeichnet.

Mithin kann die Zustandsüberwachung des Leistungspfades auch an einem Nebenabtrieb und/oder einem Nebenantrieb erfolgen. Dies ermöglicht eine dynamische Überwachung von Drehmoment- bzw. Lastverläufen der angetriebenen und/oder antreibenden Nebenaggregate. Somit kann beispielsweise eine bedarfsgerechte Regelung, insbesondere ein bedarfsgerechtes und gezieltes An- und Abschalten der Nebenaggregate erfolgen. Ferner erfolgt eine last- bzw. bedarfsgerechte Auslegung der Nebenaggregate nach Feldinformationen, insbesondere Lastkollektiven in Anbetracht der erforderlichen Klassifizierungen.

Vorzugsweise weist das Getriebe zumindest zwei primärseitig angetriebene Pumpenantriebe und zumindest zwei sekundärseitig angetriebene Pumpenantriebe auf. Bevorzugt ist die Kupplungsvorrichtung als lastschaltbare Kupplung ausgebildet und dazu vorgesehen, die Antriebsmaschine sowie die zwei primärseitig angetriebenen Pumpenantriebe und die zwei sekundärseitig angetriebenen Pumpenantriebe mit der Propellerwelle zu koppeln. Bezüglich weiterer Informationen, hinsichtlich der Anordnung und Funktion der Pumpenantriebe und der Kupplungsvorrichtung wird auf die Figuren 2 bis 6 sowie die dazugehörigen Figurenbeschreibungen verwiesen.

Im Folgenden werden Ausführungsbeispiele der Erfindung anhand der Zeichnungen näher erläutert. Hierbei zeigt
- Fig. 1: ein Zeit-Drehmoment-Diagramm eines Leistungspfades einer erfindungsge-mäßen Antriebsanordnung,
- Fig. 2: eine vereinfachte schematische Schnittdarstellung einer erfindungsgemäßen Antriebsanordnung gemäß einem ersten Ausführungsbeispiel,
- Fig. 3: eine vereinfachte schematische Schnittdarstellung einer erfindungsgemäßen Antriebsanordnung gemäß einem zweiten Ausführungsbeispiel,
- Fig. 4: eine vereinfachte schematische Schnittdarstellung einer erfindungsgemäßen Antriebsanordnung gemäß einem dritten Ausführungsbeispiel,
- Fig. 5: eine vereinfachte schematische Schnittdarstellung einer erfindungsgemäßen Antriebsanordnung gemäß einem vierten Ausführungsbeispiel, und
- Fig. 6: eine vereinfachte schematische Schnittdarstellung einer erfindungsgemäßen Antriebsanordnung gemäß einem fünften Ausführungsbeispiel.

Figur 1 zeigt einen Graphen, wobei auf einer Abszisse X eine Zeit in Minuten aufgetragen ist, und wobei auf einer Ordinate Y ein Drehmoment in Newtonmeter aufgetragen ist. Der Graph stellt einen Verlauf des Drehmoments in einem Leistungspfad einer - in dieser Figur nicht dargestellten - Antriebsanordnung für ein - hier nicht dargestelltes - Schiff über die Zeit dar. Das Drehmoment wird von einem - in dieser Figur nicht dargestellten - ersten und zweiten Sensorelement S1, S2 zur Zustandsüberwachung des Leistungspfades kontinuierlich erfasst. Ein idealer Betrieb der Antriebsanordnung ist dadurch gekennzeichnet, dass sich das Drehmoment im überwachten Leistungspfad stets zwischen einem minimalen Grenzwert A und einem maximalen Grenzwert B befindet. Eine signifikante Abweichung des Drehmoments im Leistungspfad von einem Grenzwert - insbesondere von einem minimalen oder maximalen Grenzwert - kann ein Anzeichen für eine Fehlfunktion oder eine Fehlermeldung sein. Eine dauerhafte Abweichung des Drehmoments im Leistungspfad vom maximalen Grenzwert führt zu einer Beeinträchtigung des Betriebs der Antriebsanordnung. Daher ist eine frühzeitige Identifizierung einer Abweichung des Drehmoments vom idealen Zustand notwendig, um einen Serviceumfang vorrausschauend zu planen.

In den Figuren 2 bis 6 sind unterschiedliche Ausführungsformen für eine Antriebsanordnung eines Schiffes dargestellt. Gemäß den Figuren 2, 3 und 4 umfasst die jeweilige Antriebsanordnung eine Antriebsmaschine 1 und ein Getriebe 2 zum Antrieb einer Propellerwelle 3. Ein Antriebswellen-Anschlussflansch 8 ist antriebswirksam mit der Antriebsmaschine 1, die als Hauptantriebsmotor vorgesehen ist, verbunden. Von dem Antriebswellen-Anschlussflansch 8 ausgehend ist eine Abtriebswelle 48 über eine Antriebswelle 9, eine lastschaltbare Kupplungsvorrichtung 4, eine Ritzelwelle 10 mit einem Abtriebsritzel 11 und ein Abtriebsrad 12 antreibbar. Das Abtriebsrad 12 ist verdrehfest mit der Abtriebswelle 48 verbunden. Die Abtriebswelle 48 ist über einen Abtriebswellen-Anschlussflansch 13 mit der Propellerwelle 3 des Schiffes verbunden.

Das Getriebe 2 weist zwei primärseitig angetriebene Pumpenantrieben 6a, 6b und zwei sekundärseitig angetriebene Pumpenantriebe 7a, 7b auf. Die zwei primärseitig angetriebenen Pumpenantriebe 6a, 6b sind auf der Antriebsseite des Getriebes 2 angeordnet. Ein Primärpumpenantriebsrad 14 ist verdrehfest mit der Antriebswelle 9 verbunden, um die primärseitig angetriebenen Pumpenantriebe 6a, 6b anzutreiben. Das Primärpumpenantriebsrad 14 ist in Form einer Außenverzahnung auf einem Außenlamellenträger 15 der lastschaltbaren Kupplungsvorrichtung 4 ausgebildet. Die beiden primärseitigen Pumpenantriebe 6a, 6b weisen gemeinsam eine Primärpumpenwelle 16 und ein mit der Primärpumpenwelle 16 verdrehfest verbundenes Primärpumpenrad 17 auf, das mit dem Primärpumpenantriebsrad 14 im Eingriff steht. An den beiden Enden der Primärpumpenwelle 16 ist jeweils eine Primärpumpe 18a, 18b angeordnet. Die Antriebsleistung wird von der Antriebswelle 9 über das Primärpumpenantriebsrad 14, das Primärpumpenrad 17 und die Primärpumpenwelle 16 zu den beiden primärseitig angetriebenen Primärpumpen 18a und 18b übertragen.

Die beiden sekundärseitig angetriebenen Pumpenantriebe 7a, 7b sind auf der Abtriebsseite des Getriebes 2 angeordnet. Ein Sekundärpumpenantriebsrad 19 ist koaxial zu der Ritzelwelle 10 angeordnet. Das Sekundärpumpenantriebsrad 19 ist verdrehfest auf der Ritzelwelle 10 befestigt, um die sekundärseitig angetriebenen Pumpenantriebe 7a, 7b anzutreiben. Die beiden sekundärseitigen Pumpenantriebe 7a, 7b weisen zwei Sekundärpumpenwellen 20a, 20b und jeweils ein mit der zugeordneten Sekundärpumpenwelle 20a, 20b verdrehfest verbundenes Sekundärpumpenrad 21a, 21b auf, das mit dem Sekundärpumpenantriebsrad 19 im Eingriff steht. Mit den sekundärseitig angetriebenen Pumpenantrieben sind eine Sekundärpumpe 22 und eine Wasserpumpe 23 verdrehfest verbunden. Die beiden Pumpen 22 und 23 sind unmittelbar an der jeweiligen Sekundärpumpenwelle 20a, 20b angeschlossen.

Die Ritzelwelle 10 ist mittels der lastschaltbaren Kupplungsvorrichtung 4 mit der Antriebswelle 9 koppelbar. Somit kann bei laufender Antriebsmaschine 1 eine Antriebsleistung der Antriebsmaschine 1 durch Schließen der lastschaltbaren Kupplungsvorrichtung 4 auf die Abtriebswelle 48 und weiter bis zur Propellerwelle 3 geleitet werden. Die lastschaltbare Kupplungsvorrichtung 4 ist als druckmittelbetätigte Lamellenkupplung ausgebildet und weist einen Außenlamellenträger 15 und einen Innenlamellenträger 24 auf. Der Außenlamellenträger 15 ist verdrehfest mit dem Antriebswellen-Anschlussflansch 12 verbunden. Der Innenlamellenträger 24 ist verdrehfest mit der Ritzelwelle 10 verbunden.

Ferner weist das jeweilige Getriebe 2 gemäß den Figuren 2 bis 6 Mittel zur Zustandsüberwachung eines jeweiligen Leistungspfades auf. Die Mittel zur Zustandsüberwachung des Leistungspfades umfassen jeweils ein erstes und ein zweites Sensorelement S1, S2 zur Erfassung mindestens einer Zustandsgröße des Leistungspfades. Dabei sind die zwei Sensorelemente S1, S2 im Leistungspfad zwischen einer Antriebsquelle und einer Abtriebsquelle angeordnet, um eine Abweichung von einem idealen Zustand des Leistungspfades frühzeitig identifizieren zu können und einen Serviceumfang vorrausschauend zu planen.

Gemäß den Figuren 2 bis 4 ist als Antriebsquelle die Ritzelwelle 10 und als Abtriebsquelle die Propellerwelle 3 vorgesehen. Mit anderen Worten ist das erste Sensorelement S1 leistungsflussabwärts der Kupplungsvorrichtung 4 an der Ritzelwelle 10 angeordnet, wobei das zweite Sensorelement S2 an der Propellerwelle 3 angeordnet ist.

Nach Figur 3 umfassen die Mittel zur Zustandsüberwachung des Leistungspfades neben dem ersten und zweiten Sensorelement S1, S2 auch ein drittes Sensorelement S3 zur Erfassung einer Zustandsgröße. Das dritte Sensorelement S3 ist an einem im Leistungspfad zwischen dem ersten und dem zweiten Sensorelement S1, S2 angeordneten Lagerelement 5 ausgebildet. Das Lagerelement 5 ist dazu vorgesehen, die Abtriebswelle 48 aufzunehmen.

In Figur 4 umfassen die Mittel zur Zustandsüberwachung des Leistungspfades neben dem ersten und zweiten Sensorelement S1, S2 auch ein viertes und fünftes Sensorelement S4, S5 zur Erfassung einer Zustandsgröße. Das vierte Sensorelement S4 ist leistungsflussabwärts der Antriebsmaschine 1 an einer Abtriebswelle 43 der Antriebsmaschine 1 angeordnet und das fünfte Sensorelement S5 ist leistungsflussaufwärts der Kupplungsvorrichtung 4 an einer Antriebswelle 9 des Getriebes 2 angeordnet.

Die Figuren 5 und 6 zeigen jeweilige Ausführungsformen einer erfindungsgemäßen Antriebsanordnung, die auf den Antriebsanordnungen der Figuren 2 bis 4 basieren, wobei die Antriebsanordnung gemäß Figur 5 einen Nebenabtrieb 25 und die Antriebsanordnung gemäß Figur 6 einen Nebenantrieb 34 aufweist. Gleiche Elemente in den Antriebsanordnungen gemäß den Figuren 2 bis 6 erfüllen gleiche Funktionen. Daher sind gleiche Elemente in den Figuren 5 und 6 mit gleichen Bezugszeichen wie in den Figuren 2 bis 4 versehen und im Folgenden nicht mehr näher erläutert.

Die Antriebsanordnung gemäß Figur 5 zeigt ein erfindungsgemäßes Getriebe 2 mit einem zusätzlichen Nebenabtrieb 25. Dieser schaltbare Nebenabtrieb 25 ist über die Primärpumpenwelle 16 antreibbar. Dazu ist eine Nebenabtriebskupplung 26 koaxial zu der Primärpumpenwelle 16 angeordnet. Mit der Nebenabtriebskupplung 26 kann der Nebenabtrieb 25 zu- und abgeschaltet werden. Das Primärpumpenrad 17 ist bei dieser Ausführungsform als eine Außenverzahnung auf einem Außenlamellenträger 27 der Nebenabtriebskupplung 26 ausgebildet, sodass die Außenlamellenträger 15 bzw. 27 der Kupplung 4 und der Nebenabtriebskupplung 26 parallel nebeneinander angeordnet sind und mit ihrer jeweiligen Verzahnung 28 bzw. 14 miteinander im Eingriff stehen. Ein Innenlamellenträger 28 der Nebenabtriebskupplung 26 ist verdrehfest mit einem Nebenabtriebsantriebsrad 29 verbunden. Das Nebenabtriebsantriebsrad 29 kämmt wiederum mit dem Nebenabtriebsrad 30, welches verdrehfest auf einer Nebenabtriebswelle 31 angeordnet ist. Die Nebenabtriebswelle 31 weist an einem Ende einen Nebenabtriebsflansch 32 auf, der zum Antrieb eines Nebenabtriebsaggregates 33 mit diesem verbindbar ist.

Nach Figur 5 sind das erste und das zweite Sensorelement S1, S2 im Nebenabtriebspfad des Getriebes 2 angeordnet. Das erste Sensorelement S1 ist leistungsflussabwärts des Nebenabtriebsantriebsrades 29 an der Nebenabtriebswelle 31 angeordnet und das zweite Sensorelement S2 ist leistungsflussaufwärts des Nebenabtriebsaggregates 33 an einer Abtriebswelle 44 des Nebenabtriebsaggregates 33 angeordnet.

Die Antriebsanordnung gemäß Figur 6 zeigt ein erfindungsgemäßes Getriebe 2 mit einem zuschaltbaren Nebenantrieb 34. Mit dem zuschaltbaren Nebenantrieb 34 kann unabhängig vom Betrieb der Antriebsmaschine 1 sekundärseitig eine Antriebsleistung in den Schiffsantrieb eingeleitet werden. Dazu ist die Ritzelwelle 10 über ein verdrehfest auf der Ritzelwelle 10 angeordnetes Nebenantriebsrad 35, ein Nebenantriebsantriebsrad 36, eine schaltbare Lamellenkupplung 37 und eine Nebenantriebswelle 38 mit einem Nebenantriebsflansch 39, der mit einem Nebenantriebsaggregat 45 antriebswirksam verbunden ist. Die schaltbare Lamellenkupplung 37 ist koaxial zu der Nebenantriebswelle 38 angeordnet und weist einen Innenlamellenträger 40 auf, der verdrehfest mit dem Nebenantriebsrad 35 verbunden ist. Des Weiteren weist die schaltbare Lamellenkupplung 37 einen Außenlamellenträger 41 auf, der über die Nebenantriebswelle 38 verdrehfest mit dem Nebenantriebsflansch 39 verbunden ist. Im Bereich des Nebenantriebsflansches 39 ist des Weiteren eine Bremse 40 zum Abbremsen und Festhalten des Nebenantriebes 34 angeordnet. Zusätzlich weist das Getriebe 2 gemäß Figur 6 eine Nebenantriebspumpe 42 auf, die unmittelbar über den Nebenantrieb 34 antreibbar ist. Die Nebenantriebspumpe 42 wird insbesondere für die Betriebsphasen benötigt, in denen die Antriebsmaschine 1 still steht und der Schiffsantrieb nur sekundärseitig über den Nebenantrieb 34 angetrieben wird. In solchen Betriebsphasen ist eine Schmierölversorgung durch die Primärpumpe nicht mehr gegeben. Die Nebenantriebspumpe 42 fördert dagegen sobald der Nebenantrieb 34 in Betrieb ist, um eine ausreichende Versorgung mit Schmieröl und Drucköl sicherzustellen.

Nach Figur 6 sind das erste und das zweite Sensorelement S1, S2 in einem Nebenantriebspfad des Getriebes 2 angeordnet. Das erste Sensorelement S1 ist leistungsflussabwärts des Nebenantriebsaggregates 45 an einer Abtriebswelle 46 des Nebenantriebsaggregates 45 angeordnet. Ferner ist das zweite Sensorelement S2 leistungsflussaufwärts der Lamellenkupplung 37 an der Nebenantriebswelle 38 angeordnet.

Die dargestellten Antriebsanordnungen, insbesondere die jeweiligen Getriebe 2 sind nur beispielhaft. Die Zustandsüberwachung des Leistungspfades lässt sich auch auf andere Getriebe 2 von Schiffen, insbesondere Wendegetriebe übertragen. Unerheblich ist ebenfalls das Vorhandensein oder die Position des Nebenantriebs 34 und/oder Nebenabtriebs 25.

Beispielsweise sind die Ausführungsbeispiele der Antriebsanordnungen gemäß den Figuren 2 bis 6 miteinander kombinierbar, so dass eine Antriebsanordnung geschaffen wird, die es erlaubt die zu- und/oder abgeführte Antriebs- und/oder Abtriebsleistung vollständig zu erfassen. Dadurch wird insbesondere die Datengüte verbessert. Vorteilhafterweise können Lagerelemente im Getriebe 2 überwacht werden. Beispielsweise kann eine Leistungspfadmessung am Nebenantriebspfad, am Nebenabtriebspfad sowie am Hauptabtriebspfad, nämlich zwischen der Propellerwelle 3 und der Kupplungsvorrichtung 4, vorgenommen werden. Alternativ ist es auch denkbar eine Leistungspfadmessung am Nebenantriebspfad, am Hauptantriebspfad, nämlich zwischen der Antriebsmaschine 1 und der Kupplungsvorrichtung 4, sowie am Hauptabtriebspfad, nämlich zwischen der Propellerwelle 3 und der Kupplungsvorrichtung 4, vorzunehmen.

### Bezugszeichen

- 1: Antriebsmaschine
- 2: Getriebe
- 3: Propellerwelle
- 4: Kupplungsvorrichtung
- 5: Lagerelement
- 6a, 6b: primärseitig angetriebener Pumpenantrieb
- 7a, 7b: sekundärseitig angetriebener Pumpenantrieb
- 8: Antriebswellen-Anschlussflansch
- 9: Antriebswelle
- 10: Ritzelwelle
- 11: Abtriebsritzel
- 12: Abtriebsrad
- 13: Abtriebswellen-Anschlussflansch
- 14: Primärpumpenantriebsrad
- 15: Außenlamellenträger
- 16: Primärpumpenwelle
- 17: Primärpumpenrad
- 18a, 18b: Primärpumpe
- 19: Sekundärpumpenantriebsrad
- 20a, 20b: Sekundärpumpenwelle
- 21a, 21b: Sekundärpumpenrad
- 22: Sekundärpumpe
- 23: Wasserpumpe
- 24: Innenlamellenträger
- 25: Nebenabtrieb
- 26: Nebenabtriebskupplung
- 27: Außenlamellenträger
- 28: Innenlamellenträger
- 29: Nebenabtriebsantriebsrad
- 30: Nebenabtriebsrad
- 31: Nebenabtriebswelle
- 32: Nebenabtriebsflansch
- 33: Nebenabtriebsaggregates
- 34: Nebenantrieb
- 35: Nebenantriebsrad
- 36: Nebenantriebsantriebsrad
- 37: Lamellenkupplung
- 38: Nebenantriebswelle
- 39: Nebenantriebsflansch
- 40: Innenlamellenträger
- 41: Außenlamellenträger
- 42: Nebenantriebspumpe
- 43: Abtriebswelle
- 44: Abtriebswelle
- 45: Nebenantriebsaggregat
- 46: Abtriebswelle
- 47: Bremse
- 48: Abtriebswelle

- S1: erstes Sensorelement
- S2: zweites Sensorelement
- S3: drittes Sensorelement
- S4: viertes Sensorelement
- S5: fünftes Sensorelement

- A: minimaler Grenzwert
- B: maximaler Grenzwert
- X: Abszisse
- Y: Ordinate

## Patentansprüche

1. Antriebsanordnung für ein Schiff, umfassend zumindest eine Antriebsmaschine (1), ein Rechnersystem und ein Getriebe (2) zum Antrieb einer Propellerwelle (3), wobei das Getriebe (2) Mittel zur Zustandsüberwachung eines Leistungspfades aufweist, wobei der Leistungspfad mehrere Getriebeelemente, die starr miteinander gekoppelt sind, umfasst, wobei die Zustandsüberwachung des Leistungspfades über mehrere der starr miteinander gekoppelten Getriebeelemente erfolgt, und wobei die Mittel zur Zustandsüberwachung des Leistungspfades mindestens ein erstes und ein zweites Sensorelement (S1, S2) zur Erfassung zumindest eines Drehmoments des Leistungspfades aufweisen, wobei die mindestens zwei Sensorelemente (S1, S2) im Leistungspfad zwischen einer Antriebsquelle und einer Abtriebsquelle angeordnet sind, wobei das Rechnersystem dazu vorgesehen ist, durch Verarbeitung von Sensorsignalen der mindestens zwei Sensorelemente (S1, S2) einen Serviceumfang für eine bevorstehende Wartung zu erstellen oder zu ergänzen und ein Serviceintervall anzupassen.

2. Antriebsanordnung nach Anspruch 1, **dadurch gekennzeichnet, dass** das erste Sensorelement (S1) leistungsflussabwärts einer Kupplungsvorrichtung (4) angeordnet ist, wobei das zweite Sensorelement (S2) an der Propellerwelle (3) angeordnet ist.

3. Antriebsanordnung nach einem der vorhergehenden Ansprüche, **dadurch gekennzeichnet, dass** die Mittel zur Zustandsüberwachung des Leistungspfades zumindest ein drittes Sensorelement (S3) zur Erfassung mindestens einer Zustandsgröße aufweisen, wobei das dritte Sensorelement (S3) an einem im Leistungspfad zwischen dem ersten und dem zweiten Sensorelement (S1, S2) angeordneten Lagerelement (5) ausgebildet ist.

4. Antriebsanordnung nach einem der vorhergehenden Ansprüche, **dadurch gekennzeichnet, dass** die Mittel zur Zustandsüberwachung des Leistungspfades zumindest ein viertes und fünftes Sensorelement (S4, S5) zur Erfassung mindestens einer Zustandsgröße aufweisen, wobei das vierte Sensorelement (S4) leistungsflussabwärts der Antriebsmaschine (1) angeordnet ist, und wobei das fünfte Sensorelement (S5) leistungsflussaufwärts der Kupplungsvorrichtung (4) angeordnet ist.

5. Antriebsanordnung nach Anspruch 1, **dadurch gekennzeichnet, dass** das erste und zweite Sensorelement (S1, S2) in einem Nebenantriebspfad des Getriebes (2) angeordnet sind.

6. Antriebsanordnung nach einem der vorhergehenden Ansprüche, **dadurch gekennzeichnet, dass** das jeweilige Sensorelement (S1, S2, S3, S4, S5) dazu vorgesehen ist, zumindest ein Drehmoment zu erfassen.

7. Antriebsanordnung nach einem der vorhergehenden Ansprüche, **dadurch gekennzeichnet, dass** das Getriebe (2) zumindest zwei primärseitig angetriebene Pumpenantriebe (6a, 6b) und zumindest zwei sekundärseitig angetriebene Pumpenantriebe (7a, 7b) aufweist.

8. Antriebsanordnung nach Anspruch 7, **dadurch gekennzeichnet, dass** die Kupplungsvorrichtung (4) als lastschaltbare Kupplung ausgebildet ist und dazu vorgesehen ist, die Antriebsmaschine (1) sowie die zwei primärseitig angetriebenen Pumpenantriebe (6a, 6b) und die zwei sekundärseitig angetriebenen Pumpenantriebe (7a, 7b) mit der Propellerwelle (3) zu koppeln.

9. Verfahren zur Zustandsüberwachung eines Leistungspfades in einem Getriebe (2) einer Antriebsanordnung für ein Schiff nach einem der vorhergehenden Ansprüche, wobei der Leistungspfad mehrere Getriebeelemente, die starr miteinander gekoppelt sind, umfasst, wobei die Zustandsüberwachung des Leistungspfades über mehrere Getriebeelemente erfolgt, wobei zumindest ein Drehmoment von Mitteln zur Zustandsüberwachung des Leistungspfades erfasst wird, wobei Sensorsignale von mindestens zwei Sensorelementen (S1, S2) durch ein Rechnersystem verarbeitet werden um eine Abweichung von einem idealen Zustand des Leistungspfades frühzeitig zu identifizieren und einen Serviceumfang für eine bevorstehende Wartung zu erstellen oder zu ergänzen und ein Serviceintervall anzupassen.

## Claims

1. Drive arrangement for a ship, comprising at least one drive machine (1), a computer system and a transmission (2) for driving a propeller shaft (3), wherein the transmission (2) has means for monitoring the state of a power path, wherein the power path comprises multiple transmission elements, which are rigidly coupled to one another, wherein the monitoring of the state of the power path is performed by way of multiple transmission elements that are rigidly coupled to one another, and wherein the means for monitoring the state of the power path have at least one first and one second sensor element (S1, S2) for sensing at least one torque of the power path, wherein the at least two sensor elements (S1, S2) are arranged in the power path between a drive input source and a drive output source, wherein the computer system is intended for creating or supplementing a range of services for forthcoming maintenance and for adapting a service interval by processing sensor signals of the at least two sensor elements (S1, S2).

2. Drive arrangement according to Claim 1, **characterized in that** the first sensor element (S1) is arranged downstream of a coupling device (4) in the power flow, wherein the second sensor element (S2) is arranged on the propeller shaft (3).

3. Drive arrangement according to one of the preceding claims, **characterized in that** the means for monitoring the state of the power path have at least one third sensor element (S3) for sensing at least one state variable, wherein the third sensor element (S3) is formed on a bearing element (5) arranged in the power path between the first and second sensor elements (S1, S2).

4. Drive arrangement according to one of the preceding claims, **characterized in that** the means for monitoring the state of the power path have at least one fourth and fifth sensor element (S4, S5) for sensing at least one state variable, wherein the fourth sensor element (S4) is arranged downstream of the drive machine (1) in the power flow, and wherein the fifth sensor element (S5) is arranged upstream of the coupling device (4) in the power flow.

5. Drive arrangement according to Claim 1, **characterized in that** the first and second sensor elements (S1, S2) are arranged in a power take-in path of the transmission (2).

6. Drive arrangement according to one of the preceding claims, **characterized in that** the respective sensor element (S1, S2, S3, S4, S5) is intended for sensing at least one torque.

7. Drive arrangement according to one of the preceding claims, **characterized in that** the transmission (2) has at least two pump drives (6a, 6b) driven on the primary side and at least two pump drives (7a, 7b) driven on the secondary side.

8. Drive arrangement according to Claim 7, **characterized in that** the coupling device (4) is designed as a power-shiftable clutch and is intended for coupling the drive machine (1) as well as the two pump drives (6a, 6b) driven on the primary side and the two pump drives (7a, 7b) driven on the secondary side to the propeller shaft (3).

9. Method for monitoring the state of a power path in a transmission (2) of a drive arrangement for a ship according to one of the preceding claims, wherein the power path comprises multiple transmission elements, which are rigidly coupled to one another, wherein the monitoring of the state of the power path is performed by way of multiple transmission elements, wherein at least one torque is sensed by means for monitoring the state of the power path, wherein sensor signals from at least two sensor elements (S1, S2) are processed by a computer system in order to identify a deviation from an ideal state of the power path at an early time and create or supplement a range of services for forthcoming maintenance and adapt a service interval.

## Revendications

1. Ensemble de propulsion d'un navire, ledit ensemble comprenant au moins une machine de propulsion (1), un système informatique et une transmission (2) destinée à l'entraînement d'un arbre d'hélice (3), la transmission (2) comportant des moyens destinés à surveiller l'état d'un chemin de puissance, le chemin de puissance comprenant une pluralité d'éléments de transmission qui sont accouplés rigidement les uns aux autres, la surveillance de l'état du chemin de puissance étant effectuée par le biais d'une pluralité d'éléments de transmission accouplés rigidement les uns aux autres, et les moyens destinés à surveiller l'état du chemin de puissance comportant au moins un premier et un deuxième élément de détection (S1, S2) destinés à détecter au moins un couple du chemin de puissance, les au moins deux éléments de détection (S1, S2) étant disposés dans le chemin de puissance situé entre une source de propulsion et une source de sortie, le système informatique étant prévu pour créer ou compléter une étendue de service pour une maintenance à venir et pour adapter un intervalle de service par traitement de signaux de détection provenant des au moins deux éléments de détection (S1, S2).

2. Ensemble de propulsion selon la revendication 1, **caractérisé en ce que** le premier élément de détection (S1) est disposé en aval d'un dispositif d'accouplement (4) en termes de flux de puissance, le deuxième élément de détection (S2) étant sur l'arbre d'hélice (3).

3. Ensemble de propulsion selon l'une des revendications précédentes, **caractérisé en ce que** les moyens destinés à surveiller l'état du chemin de puissance comportent au moins un troisième élément de détection (S3) destiné à détecter au moins une grandeur d'état, le troisième élément de détection (S3) étant formé au niveau d'un élément de palier (5) disposé dans le chemin de puissance situé entre les premier et deuxième éléments de détection (S1, S2).

4. Ensemble de propulsion selon l'une des revendications précédentes, **caractérisé en ce que** les moyens destinés à surveiller l'état du chemin de puissance comportent au moins des quatrième et cinquième éléments de détection (S4, S5) destinés à détecter au moins une grandeur d'état, le quatrième élément de détection (S4) étant disposé en aval de la machine de propulsion (1) en termes de flux de puissance, et le cinquième élément de détection (S5) étant disposé en amont du dispositif d'accouplement (4) en termes de flux de puissance.

5. Ensemble de propulsion selon la revendication 1, **caractérisé en ce que** les premier et deuxième éléments de détection (S1, S2) sont disposés dans un chemin de propulsion auxiliaire de la transmission (2).

6. Ensemble de propulsion selon l'une des revendications précédentes, **caractérisé en ce que** l'élément de détection respectif (S1, S2, S3, S4, S5) est prévu pour détecter au moins un couple.

7. Ensemble de propulsion selon l'une des revendications précédentes, **caractérisé en ce que** la transmission (2) comporte au moins deux entraînements de pompe (6a, 6b) entraînés côté primaire et au moins deux entraînements de pompe (7a, 7b) entraînés côté secondaire.

8. Ensemble de propulsion selon la revendication 7, **caractérisé en ce que** le dispositif d'accouplement (4) est réalisé sous la forme d'un accouplement à commutation de charge et est prévu pour accoupler la machine de propulsion (1) ainsi que les deux entraînements de pompe (6a, 6b) entraînés du côté primaire et les deux entraînements de pompe (7a, 7b) entraînés du côté secondaire à l'arbre d'hélice (3).

9. Procédé de surveillance de l'état d'un chemin de puissance dans une transmission (2) d'un ensemble de propulsion d'un navire selon l'une des revendications précédentes, le chemin de puissance comprenant une pluralité d'éléments de transmission qui sont accouplés rigidement les uns aux autres, l'état du chemin de puissance étant surveillé par le biais d'une pluralité d'éléments de transmission, au moins un couple étant détecté par des moyens destinés à surveiller l'état du chemin de puissance, les signaux de détection d'au moins deux éléments de détection (S1, S2) étant traités par un système informatique afin d'identifier un écart par rapport à un état idéal du chemin de puissance à un stade précoce et de créer ou compléter une étendue de service pour la maintenance et adapter un intervalle de service.
